# EUROPEAN PATENT APPLICATION

(11) **EP 1 804 244 A2**
(43) Date of publication of application: **04.07.2007**
(21) Application number: 06115019.9
(22) Date of filing: 06.06.2006
(51) Int. Cl.: G11B 20/00, G11B 27/10, G11B 27/11, H04L 29/06

(54) **Reproduction apparatus and content reproduction method**

(30) Priority: 28.12.2005 JP 2005377684
(71) Applicant: KABUSHIKI KAISHA TOSHIBA, Tokyo 105-8001 (JP)
(72) Inventor: Nakagawa, Masaki Toshiba Corp. IP Division, Tokyo, 105-8001 (JP)
(74) Representative: Henkel, Feiler & Hänzel

(57) **Abstract**

According to one embodiment of a content reproduction method including downloading supplemental contents from a supplier's contents associated with a set optical disk, retaining the downloaded supplemental contents in a predetermined storage section, and in the case where an optical disk is reproduced by a reproduction apparatus which is different from the reproduction apparatus employed for downloading such supplemental contents, transferring or copying the downloaded supplemental contents to a reproduction apparatus which is different from the reproduction apparatus employed for the download, or alternatively, enabling readout from a reproduction apparatus which is different from the reproduction apparatus employed for the download.

## Description

One embodiment of the invention relates to a reproduction apparatus that, when contents are reproduced from a medium in which the contents are stored, reproducing supplemental contents acquired via a network.

Optical disks, such as Digital Versatile Discs (DVDs) are available as storage mediums capable of retaining video image contents or audio contents with high density.

Optical disks are rapidly becoming prevalent, since they are capable of reproduction of contents from an arbitrary reproduction position, and have a relatively large storage capacity with respect to physical size, as compared to a tape based medium.

In recent years, there have been also already practically used ultra high-density optical disks (High Definition Digital Versatile Disc, hereinafter, referred to as HD DVD) capable of storing HD-standard video image data and high quality sound audio data in one disk by utilizing a blue or violet laser light beam with a short wavelength for reproduction of contents (information) from the optical disks.

In HD DVD standard optical disks or even with some standard DVD optical disks, address or link destination information, such as uniform resource locator (URL) for recommending access to a content provider or supplier's supplemental contents via a network can be included in one of the contents stored in an optical disk.

Japanese Patent Application Publication (KOKAI) No. 2004-37981 discloses an example of, with respect to downloaded contents in a main unit called a home server, enabling transfer to a client machine permitted for reproduction of contents downloaded by the server.

However, a charge for a download is not described in Japanese Patent Application Publication No. 2004-37981. For example, in the case where a plurality of reproduction apparatuses are present in a home, or alternatively, in the case where an individual having a plurality of reproduction apparatuses attempts to reproduce supplemental contents by using an arbitrary reproduction apparatus, there is a problem that such supplemental contents cannot be reproduced by an apparatus other than the reproduction apparatus used for the downloading.

An object of the invention is to provide a content reproduction method including downloading supplemental contents from a supplier's contents associated with a set optical disk, retaining the downloaded supplemental contents in a predetermined storage section, and in the case where an optical disk is reproduced by a reproduction apparatus which is different from the reproduction apparatus employed for downloading such supplemental contents.

According to an aspect of the invention, there is provided a method for sharing multimedia content among two or more disparate apparatus, the method characterized by comprising:
identifying an optical disk that is loaded in a first reproduction apparatus;
communicating with another reproduction apparatus at least partially in response to the identification; and
receiving supplemental multimedia content from the other reproduction apparatus, where the supplemental multimedia content is associated with the same optical disk, but is not retrievable from the optical disk itself.

This summary of the invention does not necessarily describe all necessary features so that the invention may also be a sub-combination of these described features.

The invention can be more fully understood from the following detailed description when taken in conjunction with the accompanying drawings, in which:

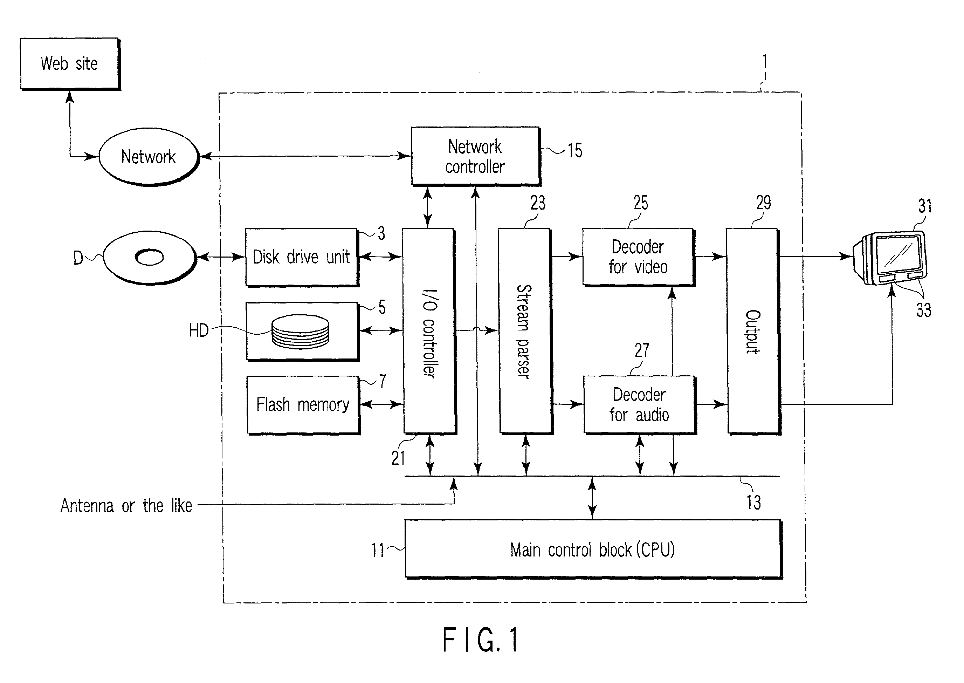

FIG. 1 is an exemplary diagram showing a reproduction apparatus in accordance with an embodiment of the invention;

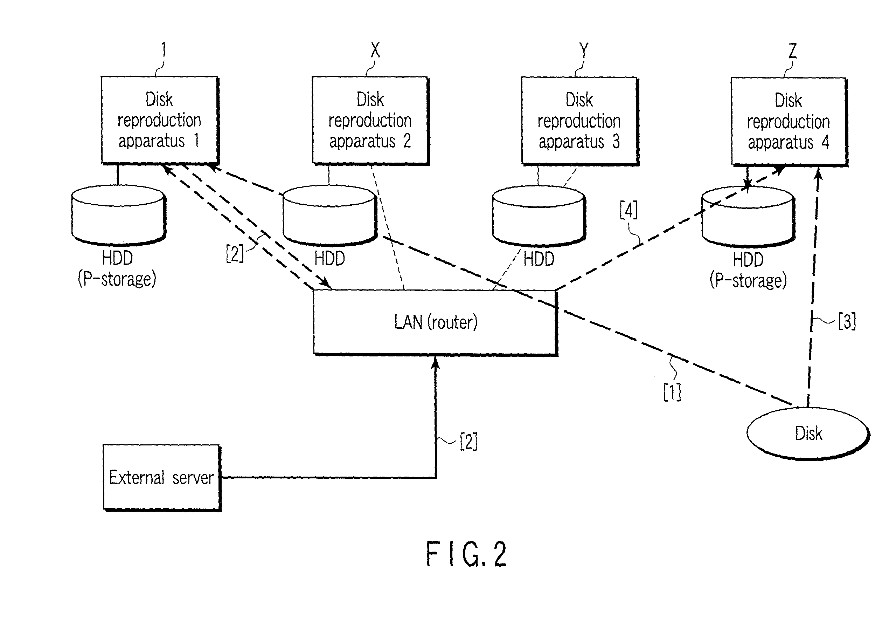

FIG. 2 is an exemplary diagram showing an example of a concept of reading out supplemental contents retained in the persistent storage (P-storage) of an arbitrary reproduction apparatus by another reproduction apparatuses situated over a local area network (LAN), and reproducing the read out contents together with contents stored in a loaded HD DVD disk D;

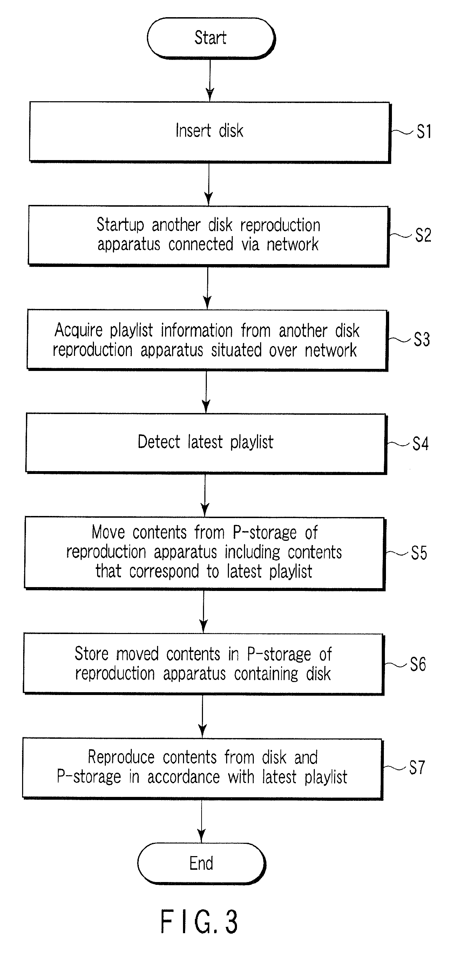

FIG. 3 is an exemplary flow chart illustrating one example of procedures for reading out the supplemental contents retained in the P-storage of an arbitrary reproduction apparatus described with reference to FIG. 2 by another reproduction apparatus situated over a LAN, and then, reproducing the read out contents together with contents stored in the loaded HD DVD disk D;

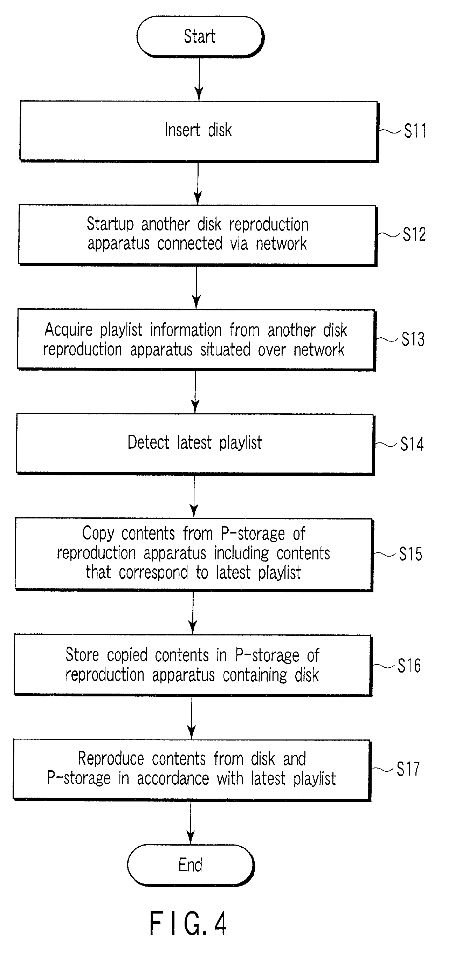

FIG. 4 is an exemplary flow chart illustrating one example of procedures for reading out the supplemental contents retained in the P-storage of an arbitrary reproduction apparatus described with reference to FIG. 2 by another reproduction apparatus situated over a LAN, and then, reproducing the read out contents together with contents stored in the loaded HD DVD disk D;

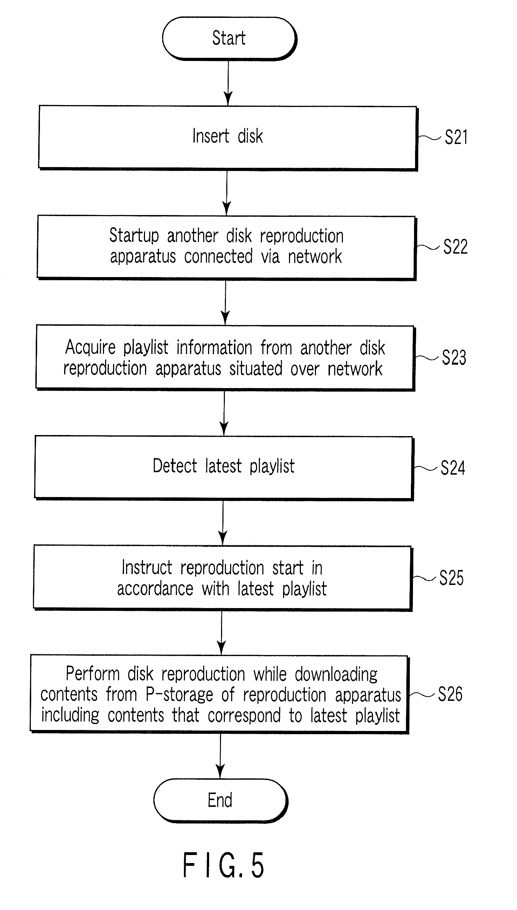

FIG. 5 is an exemplary flow chart illustrating one example of procedures for reading out the supplemental contents retained in the P-storage of an arbitrary reproduction apparatus described with reference to FIG. 2 by another reproduction apparatus situated over a LAN, and then, reproducing the read out contents together with contents stored in the loaded HD DVD disk D; and

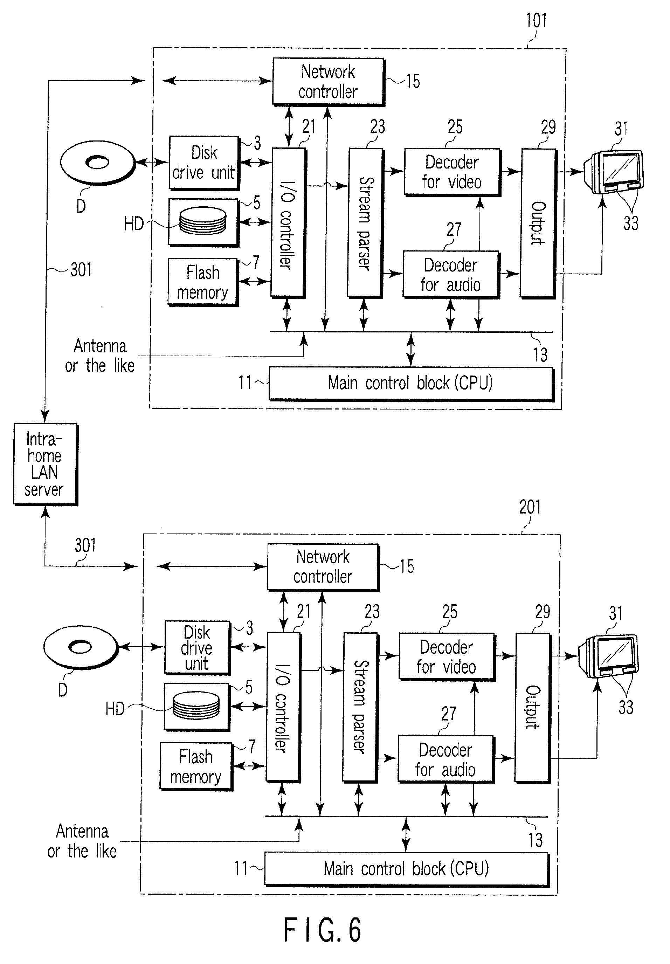

FIG. 6 is an exemplary diagram showing an example of an apparatus capable of reading out the supplemental contents retained in the P-storage of an arbitrary reproduction apparatus shown in FIG. 2 by another reproduction apparatus situated over a LAN, and reproducing the read out contents together with contents stored in the loaded HD DVD disk D.

Various embodiments according to the present invention will be described hereinafter with reference to the accompanying drawings. In general, according to one embodiment of the invention, a cooling device comprises a heat receiving member to receive heat from a heat generating element, a circulation path thermally connected to the heat receiving member, the circulation path carrying coolant which the heat is transferred through the heat receiving member, a pump unit to circulate the coolant inside the circulation path, a first heat radiation mechanism including a first heat radiation member thermally connected to the circulation path, and a first fan which sends air toward the first heat radiation member, and a second heat radiation mechanism including a second heat radiation member thermally connected to the circulation path, and a second fan which sends air toward the second heat radiation member.

FIG. 1 shows an example that schematically depicts an example of a reproduction apparatus according to an embodiment of the invention.

A reproduction apparatus 1 shown in FIG. 1 has: a disk drive unit 3 capable of reproducing information stored in an optical disk D, such as in an HD standard DVD disk (hereinafter, referred to as an HD DVD disk) D; a hard disk drive (HDD) unit 5 including a hard disk HD used as a Persistent Storage (hereinafter, referred to as P-storage); and a semiconductor memory that is a nonvolatile memory, for example, a flash memory 7 or the like. If the flash memory 7 has a capacity of at least 128 megabytes (M Bytes), at least one of the HDD 5 and the flash memory 7 may be provided as a Persistent Storage.

The disk drive unit 3, the hard disk drive unit 5, and the flash memory 7 are connected to a main control block 11 including a CPU via a data bus 13 and an I/O controller 21. The data retained in the HD DVD disk D, the HDD 5, and the flash memory 7 or the like can be formed in a data format known as a packetized stream (hereinafter, referred to as "PS"). In addition, in the case of an HD DVD recorder, it is also possible to perform image recording (recording) of digital broadcast waves from terrestrial sites and satellites, the broadcast waves being received from a television tuner part (not shown) having a relatively large storage capacity HDD 5. Digital broadcasts are formed in a transport stream (hereinafter, referred to as TS) format.

In PS, video images (videos) and voices (audios) or other items of control data are multiplexed in time division. Further, video images (videos) and voices (audios) are sent in a mode compressed for the purpose of reducing a data volume to be transmitted, respectively. In addition, a majority of data is provided as video data, and is compressed in accordance with standards called H. 264, VC1, or MPEG2, for example.

Data acquired via the I/O controller 21 is inputted to a stream parser 23 through a memory (D-RAM) (not shown), via the data bus 13. The inputted data is divided into video images, i.e., video signals and music (including voices), i.e., audio signals, and the separated signals are decoded by a decoder for video 25 and a decoder for audio 27, respectively, that correspond to these signals. The decoded video signals, i.e., video images are outputted to be displayable on a display device 31 represented by a liquid crystal display and a CRT, for example, through an output part 29. In addition, the decoded audio signals, i.e., music or voices are outputted from the output part 29 to a speaker 33.

A network controller 15 is also connected to the main control block 11 via the data bus 13.

The network controller 15 enables data delivery and transfer to an arbitrary number of reproduction apparatuses connected to an external server or over a LAN via a public communication line or a local area network (LAN). The external servers can include, for example, a web site or other file server of a supplier of an HD DVD disk, for example, and a distribution site or the like for distributing contents with charge. In addition, over the LAN, it is possible to connect a portable reproduction apparatus including substantially identical functions as those of the reproduction apparatus 1 or a reproduction apparatus in the same format provided in another location in home, for example, or in another format capable of reproducing an HD DVD disk D.

In the reproduction apparatus 1 shown in FIG. 1, in the case of a commercially available HD DVD disk, i.e., video software is reproduced by loading a disk to the disk drive unit 3, it is possible to provide access to a web site or other file server provided as address or link destination information, such as a URL, for recommending access to the supplier of contents stored in optical disks via the network controller 15.

By providing access to the web site or other file server corresponding to the disk supplier or to another authorized facility indicated in an HD DVD disk, it is possible to arbitrarily download supplemental contents such as other language tracks, other video images, for example, as privileges for video software purchasers. For example, supplemental contents can include contents called new guidance that are guidance of other video software supplied from the same supplier.

For example, Supplemental contents acquired by downloading can be stored in a hard disk HD of the HDD unit 5 or the flash memory 7.

Thus, in the case of reproducing optical disks in a reproduction apparatus, it is possible to reproduce contents stored in the HD DVD disks simultaneously or in parallel by downloading supplemental contents provided from content suppliers via a network. While some supplemental content can be provided for free, some of the supplemental contents can require payment for a download.

In an internal network, such as, for example, in a intra-home LAN, it is possible to connect a portable reproduction apparatus including substantially identical functions to those of the reproduction apparatus 1 or a reproduction apparatus in the same format provided in another location in home, for example, or in another format capable of reproducing an HD DVD disk D. The internal network may be constituted by using well-known cable modem with router connecting plural reproduction apparatus via LAN cables.

Therefore, when reproducing an HD DVD in another reproduction apparatus connected via a LAN, in order to reproduce the contents including supplemental contents downloaded in the P-storage of the reproduction apparatus 1 (in HDD unit 5 or flash memory 7) completely, it is desirable to be able to transfer or move, or alternatively, download supplemental contents stored in the P-storage of the reproduction apparatus 1 together with reproduction of an HD DVD disk in another reproduction apparatus situated over a LAN. Alternatively, it can be desirable to enable transferring or movement similarly prior to reproduction of disk contents in a state in which the disk is mounted.

For example, as a concept of transferring supplemental contents, as described below with reference to FIG. 2, after an HD DVD disk D being video software has been mounted or loaded to the reproduction apparatus 1 [1], supplemental contents are downloaded from a web site being a disk supplier to the P-storage of the reproduction apparatus 1 via a network [2].

Next, in the case where the HD DVD disk D is loaded to another reproduction apparatus (hereinafter, referred to as a fourth apparatus) Z situated over a LAN, and contents are reproduced [3], it is possible to enable reproduction of the supplemental contents retained in the P-storage of the reproduction apparatus 1 under a predetermined condition in the reproduction apparatus Z as well [4]. In this manner, in the reproduction apparatus Z as well, by loading the HD DVD, it is possible to reproduce the contents including supplemental contents downloaded from a web site being a disk supplier's.

FIG. 3 shows one example of procedures for reading out in another reproduction apparatus situated over a LAN the supplemental contents retained in the P-storage of an arbitrary reproduction apparatus described with reference to FIG. 2, and then, reproducing such supplemental contents together with the contents included in the loaded HD DVD disk D. In FIG. 3, there is shown that, in a state in which additional or supplemental contents are already downloaded from a web site or other file server, such as the HD DVD disk supplier's file server, to the P-storage of a predetermined reproduction apparatus, reproduction of the contents in a state in which the HD DVD disk is moved and loaded to another reproduction apparatus.

As shown in FIG. 3, in another reproduction apparatus (for example, the reproduction apparatus 1 shown in FIG. 2), an HD DVD employed when downloading supplemental contents is set (S1).

Another reproduction apparatus connected via a LAN is turned on (woken up) by a reproduction apparatus utilized for reproduction of video software, having the HD DVD disk loaded thereto, for example, by the reproduction apparatus Z shown in FIG. 2 (S2).

Subsequently, playlist information associated with a currently loaded HD DVD disk (video software) is acquired from a reproduction apparatus situated over a LAN (reproduction apparatus 1, reproduction apparatus X, or reproduction apparatus Y shown in FIG. 2) (S3).

Next, the newest playlist is detected from among playlists retained in the reproduction apparatuses acquired in step S3 (S4).

Hereinafter, in the reproduction apparatus having the HD DVD disk loaded thereto (reproduction apparatus Z), when the beginning of playback or reproduction is instructed, one or more supplemental contents stored in the P-storage of the reproduction apparatus 1 are moved to the P-storage of the reproduction apparatus Z (S5). The term "move" is provided as a control for disabling sharing of contents by a plurality of reproduction apparatuses in the reproduction apparatuses capable of reproducing an HD DVD disk. After a file is "moved," the original copy is deleted from the originating reproduction apparatus. In the case where copying of contents is not permitted, the contents are moved to the P-storage of the reproduction apparatus which is currently reproducing the contents of the HD DVD disk.

Subsequently, the moved contents are stored in the P-storage of a reproduction apparatus (reproduction apparatus "Z") having an HD DVD disk currently loaded thereto, i.e., the HDD unit 5 or the flash memory 7 (S6).

Hereinafter, in accordance with the latest playlist acquired in step S4, the latest contents including contents stored in the HD DVD disk D and contents stored in the P-storage (by "move") are reproduced by the reproduction apparatus Z, and are outputted from the connected display device 31 and speaker 33 (S7). By "move", supplemental contents are no longer present in the reproduction apparatus 1, and are moved to the reproduction apparatus Z. Thus, the playlists are erased from the inside of the reproduction apparatus 1 in which supplemental contents had been stored, and the latest playlists including supplemental contents are stored in the P-storage which has stored the contents.

In FIG. 4, unlike "move" shown in FIG. 3, a flow corresponds to a case in which sharing of contents by a plurality of reproduction apparatuses is accepted in reproduction apparatuses capable of reproducing contents of an HD DVD disk, where the apparatuses are connected to an internal network. When the HD DVD disk employed for downloading supplemental contents in another reproduction apparatus (reproduction apparatus 1 shown in FIG. 2) is loaded to a reproduction apparatus (reproduction apparatus Z) to be utilized for reproduction of video data (S11), another reproduction apparatus situated on a LAN is turned on (woken up) by the reproduction apparatus (reproduction apparatus Z) to be utilized for reproduction of video software having loaded the HD DVD disk therein (S12).

Subsequently, playlist information associated with currently loaded video software of HD DVD disk is acquired from a reproduction apparatus connected via a LAN (reproduction apparatus 1, reproduction apparatus X, or reproduction apparatus Y shown in FIG. 2, S13).

Next, the latest playlist is detected from the playlists stored in the reproduction apparatuses acquired in step S13 (S14).

Hereinafter, when reproduction start of contents is instructed in the reproduction apparatus having the HD DVD disk loaded thereto (reproduction apparatus Z), supplemental contents stored in the P-storage of the reproduction apparatus 1 are copied in the P-storage of the reproduction apparatus Z (S15). The function "copy" is available in the case where sharing of contents by a plurality of reproduction apparatuses, i.e., copying is permitted by rights management, as long as the reproduction apparatuses are capable of reproducing a plurality of HD DVD disks situated in an internal network.

Subsequently, the copied contents are stored in the P-storage of the reproduction apparatus having the HD DVD disk currently loaded thereto (reproduction apparatus "Z"), i.e., the HDD unit 5 or the flash memory 7 (S16).

Hereinafter, in accordance with the latest playlist acquired in step S14, the latest contents including contents stored in the HD DVD disk D and contents stored in the P-storage (by "copy") are reproduced by the reproduction apparatus Z, and are outputted from the connected display device 31 and speaker 33 (S17).

In FIG. 5, unlike "move" shown in FIG. 3 or "copy shown in FIG. 4, corresponds to a case in which move or copy of supplemental contents is not permitted, the supplemental contents being downloaded from P-storage of the reproduction apparatus having the HD DVD disk loaded thereto, the apparatus being employed for downloading supplemental contents. When the HD DVD disk employed for downloading supplemental contents in another reproduction apparatus (reproduction apparatus 1 shown in FIG. 2) is loaded to a reproduction apparatus (reproduction apparatus Z) to be utilized for reproduction of video data (S21), another reproduction apparatus situated on a LAN is turned on (woken up) by the reproduction apparatus (reproduction apparatus Z) to be utilized for reproduction of video software having loaded the HD DVD disk therein (S22).

Subsequently, playlist information associated with the currently loaded HD DVD disk (video software) is acquired from a reproduction apparatus situated over a LAN (reproduction apparatus 1, reproduction apparatus X, or reproduction apparatus Y shown in FIG. 2, (S23).

Next, the latest playlist is detected from playlists retained in the reproduction apparatuses, the playlists acquired in the step S23 (S24).

Hereinafter, in the reproduction apparatus having the HD DVD disk loaded thereto (reproduction apparatus Z), when reproduction start of contents are instructed (S25), contents stored in the HD DVD disk D or supplemental contents retained in the P-storage of another reproduction apparatus (reproduction apparatus 1) are reproduced in the predetermined order in accordance with the latest playlist detected in the step S24 (S26). The supplemental contents retained in the P-storage of another reproduction apparatus is downloaded from P-storage of another apparatus (reproduction apparatus 1) in accordance with the latest playlist in response to a request from the reproduction apparatus having the HD DVD disk D currently loaded thereto.

In this case, depending upon a transfer rate of contents, there is a possibility that downloading cannot keep up with a time-based process of the contents stored in the HD DVD disk D when an attempt is made to combine the downloaded supplemental contents in the contents stored in the HD DVD disk D in accordance with time series. While presuming such a case, the downloading shown in the step S26 is to volatile memories, such as DRAM (high speed accessible volatile memory, not shown), for disabling storing to the P-storage and erasing contents at the same time of the end of reproduction (or the reproduction apparatus 1 is turned off).

In this manner, when reproducing the contents stored in the HD DVD disk D in the step S25, the latest contents including the contents already stored in the P-storage of another reproduction apparatus are reproduced by the reproduction apparatus Z in accordance with the latest playlist detected in the step S24, and the reproduced contents are outputted from the connected display device 31 and speaker 33.

As has been described above, in a reproduction apparatus connected to an internal network, for example, to an intra-home LAN, supplemental contents already acquired in another reproduction apparatus connected in the network can be reproduced as one item of contents by "move", "copy", or "download" together with the contents stored in the HD DVD disk employed for downloading supplemental contents under a predetermined condition in another reproduction apparatus situated in the network.

In this manner, in the case where supplemental contents provided from a content supplier's are downloaded from a network for a fee, for example, it can be sufficient to download only once in a home, and moreover, a problem that a charge is required every time a download is performed is ameliorated.

Therefore, in one home or the like, after temporarily downloading supplemental contents with charge associated with contents of one HD DVD disk, when reproducing the HD DVD disk by a reproduction apparatus which is different from a reproduction apparatus employed for downloading the supplemental contents, there is no new charge for new downloading of the supplemental contents. In this manner, in the HD DVD disk in which downloading of supplemental contents with charge is recommended at the time of reproduction as well, there is no need for users to worry about a download charge, and further improvement of sales of HD DVD disks is expected.

The above-described reproduction apparatus 1 may be embodied as a storage device having a function of a server, a personal computer, laptop computer, a dedicated DVD player, and the like, and the various apparatus can be in communication over an electronic network, e.g., an intra-home LAN. In addition, as a network, a wireless LAN can also be used. In this case, at least one of the reproduction apparatuses shown in FIG. 2 (for example, reproduction apparatus X) can be employed as a mobile (portable) reproduction apparatus, such as a player for an automobile.

In addition, supplemental contents retained in the P-storage of an arbitrary reproduction apparatus shown in FIG. 2 are read out by another reproduction apparatus situated over a LAN, and the contents stored in the loaded HD DVD disk D are reproduced together, as schematically shown in FIG. 6. Of course, this reproduction is achieved by connecting two reproduction apparatuses 101 and 201 having substantially assigned thereto the similar functions to those of the reproduction apparatus 1 shown in FIG. 1 via an intra-home LAN, i.e., an internal network 301, making it possible to mutually transfer contents.

It is to be noted that the present invention is not to be limited by the above-described embodiment, and various modification may be made within the scope of the invention. For example, in the above-described embodiment, there are two sets of the heat radiation fins and the fan on either side of the pump unit, but three sets or more may be provided. In the case where there are three or more sets, the third set of heat radiation fins and the fan may be integrally provided with the pump unit.

In addition, coolant circulation path which contacts, or is in the vicinity of the heat radiation fins may be at the inner diameter side or the outer diameter side of the heat radiating body of the heat radiation fins, and may be arranged around two or more circumferences.

Also, a heat receiving member may be arranged separately from the pump unit 13. In other words, the cooling device 11 may have independent heat receiving member at some portion in the coolant circulation path 15, for example between the pump unit 13 and the first cooling mechanism.

Furthermore, the coolant circulation path may have joints at suitably selected positions.

## Claims

1. A method for sharing multimedia content among two or more disparate apparatus, the method **characterized by** comprising:
identifying an optical disk that is loaded in a first reproduction apparatus;
communicating with another reproduction apparatus at least partially in response to the identification; and
receiving supplemental multimedia content from the other reproduction apparatus, where the supplemental multimedia content is associated with the same optical disk, but is not retrievable from the optical disk itself.

2. The method of claim 1, **characterized by** further comprising playing back in the first reproduction apparatus the supplemental multimedia content prior to play back of the multimedia content stored on the optical disk.

3. The method of claim 1, **characterized by** further comprising playing back in the first reproduction apparatus the supplemental multimedia content at the same time as play back of the multimedia content stored on the optical disk.

4. The method of claim 1, **characterized by** further comprising playing back in the first reproduction apparatus at least a portion of the supplemental multimedia content while receiving the supplemental multimedia content.

5. The method of claim 1, **characterized by** further comprising playing back in the first reproduction apparatus the multimedia content stored on the optical disk while receiving the supplemental multimedia content.

6. The method of claim 1, **characterized by** further comprises signaling the other reproduction apparatus to power up.

7. The method of claim 1, **characterized in that** the supplemental multimedia content is received over an internal network.

8. The method of claim 1, **characterized in that** the moving such that the supplemental multimedia content is deleted from the other reproduction apparatus.

9. A method for sharing multimedia content among two or more disparate apparatus, the method **characterized by** comprising:
receiving an indication in a providing reproduction apparatus from another reproduction apparatus identifying a particular loaded optical disk; and
providing supplemental multimedia content to the other reproduction apparatus, where the supplemental multimedia content is associated with the same optical disk as the particular loaded optical disk.

10. The method of claim 9, **characterized by** further comprising downloading the supplemental multimedia content from an external server for a fee.

11. The method of claim 10, **characterized in that** the supplemental multimedia content is provided to the other reproduction apparatus without a fee.

12. The method of claim 11, **characterized in that** the moving such that the supplemental multimedia content is deleted from the providing apparatus.

13. The method of claim 9, **characterized by** further comprising downloading the supplemental multimedia content from an external server at a time earlier than providing the supplemental multimedia content.

14. The method of claim 9, **characterized in that** the deleting the supplemental multimedia content from the providing apparatus according to digital rights management.

15. The method of claim 1, **characterized by** further comprising communicating with the other reproduction apparatus via an internal network.

16. An apparatus (1) **characterized by** comprising:
an optical drive (3);
a data store (7) for storing supplemental multimedia content;
a communication interface (15) for communicating with a reproduction apparatus; and
a controller (11) configured to receive an indication from the reproduction apparatus identifying a particular optical disk loaded in the reproduction apparatus, the controller further configured to provide supplemental multimedia content to the other reproduction apparatus, where the supplemental multimedia content is associated with the same optical disk.

17. The apparatus of claim 16, **characterized in that** the controller (11) is further configured to download the supplemental multimedia content from an external server and associate the downloaded supplemental multimedia content with an optical disk loaded in the optical drive.

18. The apparatus of claim 16, **characterized in that** the controller (11) is further configured to delete the supplemental multimedia content according to digital rights management.

19. The apparatus of claim 16, **characterized in that** the apparatus (1) includes a DVD player, a game box, or a personal computer.
